# EUROPÄISCHE PATENTANMELDUNG

(11) **EP 4 299 405 A1**
(43) Veröffentlichungstag der Anmeldung: **03.01.2024**
(21) Anmeldenummer: 23176664.3
(22) Anmeldetag: 01.06.2023
(51) Int. Cl.: B61D 33/00, B61D 35/00, B60N 2/26, B60R 15/00

(54) **SANITÄRZELLE MIT KLEINKINDERSITZ**

(30) Priorität: 30.06.2022 DE 102022206689
(71) Anmelder: Siemens Mobility GmbH, 81739 München (DE)
(72) Erfinder: Cinarci, Turgay, 56075 Koblenz (DE); Gärtner, Ralph, 41379 Brüggen (DE); Janssen, Michael, 44801 Bochum (DE)
(74) Vertreter: Siemens Patent Attorneys

(57) **Zusammenfassung**

Die Erfindung betrifft eine Sanitärzelle (1) für ein Schienenfahrzeug umfassend wenigstens einen an einer Wand (7) der Sanitärzelle befestigten Kindersitz (2), der Kindersitz (2) zur Aufnahme eines Kleinkinds geeignet ausgebildet ist und so an der Wand (7) der Sanitärzelle (1) befestigt ist, dass ein Raum, welcher von einem im Kindersitz (2) aufgenommenen Kleinkind erreichbar ist, frei von Einrichtungen (3, 4, 5, 6) der Sanitärzelle ist.

## Beschreibung

Die Erfindung betrifft Sanitärzelle für ein Schienenfahrzeug umfassend wenigstens einen an einer Wand der Sanitärzelle befestigten Kindersitz.

An einer Wand befestigte und klappbare Babysitze sind grundsätzlich bekannt, beispielsweise aus der US 5 362 123 A, der CN 212325975 U oder der CN 103284517 A.

Auch in Sanitärzellen angeordnete Babysitze sind aus der JP 2018-9404 A oder der JP 2018-174970 A bekannt geworden.

Eine weitere Klappsitzanordnung für Kinder in Sanitärzellen von Schienenfahrzeugen ist aus der EP 3 620 342 A1 bekannt, welche zur sicheren Aufnahme eines Kleinkinds nicht geeignet scheint.

In Schienenfahrzeugen besteht aktuell keine Möglichkeit ein Kleinkind, beispielsweise in einem Alter unter 3 Jahren, sicher zu platzieren. Dies ist jedoch notwendig, wenn in der Sanitärzelle ein zweites Kind gewickelt werden muss oder ein Elternteil die Toilette nutzen möchte. Lediglich die Nutzung von, gegebenenfalls transportablen, Hochstühlen aus Familienabteilen ist möglich.

Der Erfindung liegt die Aufgabe zugrunde, eine verbesserte Sanitärzelle eines Schienenfahrzeugs vorzuschlagen.

Gelöst wird die Aufgabe durch den Gegenstand des unabhängigen Patentanspruchs 1. Weiterbildungen und Ausgestaltungen der Erfindung finden sich in den Merkmalen der abhängigen Patentansprüche wieder.

Eine erfindungsgemäße Sanitärzelle für ein Schienenfahrzeug umfasst wenigstens einen an einer Wand der Sanitärzelle befestigten Kindersitz, wobei der Kindersitz zur Aufnahme eines Kleinkinds geeignet ausgebildet ist und so an der Wand der Sanitärzelle befestigt ist, dass ein Raum, welcher von einem im Kindersitz aufgenommenen Kleinkind erreichbar ist, frei von Einrichtungen der Sanitärzelle ist. Die Ausgestaltung und die Abmessungen des Kindersitzes sind zur sicheren Aufnahme eines Kleinkinds, insbesondere eines Kinds jünger als 3 Jahre, geeignet ausgewählt.

Zu den Einrichtungen der Sanitärzelle zählen insbesondere funktionale Einrichtungen, wie Armaturen, Bedienelemente, auch berührungslos betätigbare Bedienelemente, ein Toilettenpapierspender, ein Seifenspender, ein Papierhandtuchspender oder ein Handtrockner, ein Mülleimer, gegebenenfalls ein Wickeltisch und die sanitären Anlagen wie eine Toilette und/oder ein Waschbecken. Anders ausgedrückt ist ein Abstand des Kindersitzes zu sämtlichen Einrichtungen der Sanitärzelle so bemessen, dass diese von einem im Kindersitz aufgenommenen Kleinkind nicht erreichbar sind.

Insbesondere sind ausschließlich die Wand, an welchem der Kindersitz befestigt ist, und der Kindersitz als solchem durch das im Kindersitz aufgenommenen Kleinkind erreichbar, also innerhalb seines Bewegungsradius.

Insbesondere ist der Kindersitz auch in einer Höhe angeordnet, die so bemessen ist, dass ein im Kindersitz aufgenommenes Kleinkind nicht den Boden der Sanitärzelle berühren kann. Die Anbringung des Kindersitzes kann aufgrund der Wandmontage in einer für die Eltern ergonomischen Position erfolgen.

Weitergebildet ist der Kindersitz so in der Sanitärzelle angeordnet, dass die Erreichbarkeit und Bedienbarkeit der Einrichtungen der Sanitärzelle nicht eingeschränkt ist. Beispielsweise ist ein Abstand des Kindersitzes zu einem ausklappbaren Wickeltisch so groß bemessen, dass ein Ausklappen des Wickeltischs sowie auch dessen Nutzung durch eine davorstehende Person, nicht eingeschränkt ist. Dies gilt selbstverständlich dann auch noch, wenn ein Kleinkind im Kindersitz aufgenommen ist.

Der Kindersitz ist somit in einer günstigen Lage und Position an einer Wand der Sanitärzelle in die bestehende Kabinenstruktur integriert. Durch eine zusätzliche statische Absicherung ist der sichere Nutzen für das Kleinkind gegeben.

Gemäß einer weiteren Weiterbildung ist ein Raum, welcher von einem im Kindersitz aufgenommenen Kleinkind erreichbar ist, frei von metallischen Konstruktionselementen der Sanitärzelle. Insbesondere ist die Wand, an welchem der Kindersitz befestigt ist, und der Kindersitz als solches, zumindest innerhalb eines durch das im Kindersitz aufgenommenen Kleinkind erreichbaren Bereichs, also innerhalb seines Bewegungsradius, frei von metallischen Konstruktionselementen, wie Abdeckleisten, Schrauben oder Nieten. Die Oberfläche der Wand, an welchem der Kindersitz befestigt ist, und die Oberfläche des Kindersitzes können ausschließlich aus Kunststoff gebildet sein, und sind insbesondere frei von scharfen Kanten und Ecken.

Gemäß einer weiteren Weiterbildung der Erfindung ist vorgesehen, dass die Sanitärzelle als rollstuhlgerechte Sanitärzelle ausgebildet ist, wobei ein vorgegebener Bewegungsbereich in der Sanitärzelle für Rollstühle frei vom Kindersitz ist. Auch dies gilt selbstverständlich, wenn ein Kleinkind im Kindersitz aufgenommen ist. Eine rollstuhlgerechte Sanitärzelle wird auch als Universalnasszelle bezeichnet. Sie ist geeignet zur Benutzung für Menschen mit eingeschränkter Mobilität ausgebildet und weist einsprechend einen freien Raum zur Bewegung eines Rollstuhls auf - den vorgegebenen Bewegungsbereich in der Sanitärzelle für Rollstühle (Anforderung nach TSI PRM). Entsprechend ist der Kindersitz so in der Sanitärzelle angeordnet, dass die Erreichbarkeit und Bedienbarkeit der Einrichtungen der Sanitärzelle für Rollstuhlfahrer durch den Kindersitz nicht eingeschränkt sind.

Weitergebildet ist der Kindersitz klappbar ausgebildet. Er umfasst eine Rückenlehne, die an der Wand der Sanitärzelle befestigt ist, insbesondere fest mit dieser verbunden ist, und eine an der Rückenlehne klappbar gelagerte Sitzfläche. Darüber hinaus umfasst er gemäß der Weiterbildung einen an der Rückenlehne drehbar gelagerten Brustbügel, der seinerseits mit der Sitzfläche über eine vertikale Sicherung gegen Herausrutschen des Kleinkinds verbunden ist. Brustbügel und vertikale Sicherung sowie vertikale Sicherung und Sitzfläche sind dabei wiederum jeweils drehbar zueinander miteinander verbunden.

Die Sitzfläche ist somit zur Wand hin einklappbar, beispielsweise hochklappbar, und von der Wand ausklappbar, beispielsweise herunterklappbar. Gleiches gilt dann für den Brustbügel.

Der Brustbügel verhindert ein Herausfallen bzw. -kippen des Kleinkinds aus dem Kindersitz nach vorne und zu den Seiten. Er wirkt gleichzeitig als Armlehnen. Insbesondere ist er das aufgenommene Kleinkind umschließend ausgebildet.

Die vertikale Sicherung kann als Gurt oder als feste Stange ausgebildet sein. Sie ist im ausgeklappten Zustand des Kindersitzes vor dem Körper des aufgenommenen Kleinkinds angeordnet und teilt die Region zwischen Brustbügel und Sitzfläche in zwei Teile. Die Beine des aufgenommenen Kleinkinds werden jeweils auf unterschiedlichen Seiten der vertikalen Sicherung zwischen Brustbügel und Sitzfläche geführt und somit wird ein Herausrutschen des Kindes nach unten verhindert.

Die Rückenlehne kann Seitenwangen aufweisen. Brustgurt und Sitzfläche können an den Seitenwangen der Rückenlehne montiert sein.

Wie oben bereits ausgeführt, bleibt die Funktionalität, die Erreichbarkeit und Bedienbarkeit, der Einrichtungen der Sanitärzelle auch im ausgeklappten Zustand des Kindersitzes erhalten. Durch den Klappmechanismus wird der Bewegungsbereich für Rollstühle zumindest im eingeklappten Zustand des Kindersitzes nicht eingeschränkt. Der Kindersitz stellt durch seinen Klappmechanismus kombiniert mit der Wandmontage einen kompakten Aufbau dar, sodass keine zusätzliche Platzkapazität benötigt wird. Der Bewegungsbereich gemäß TSI PRM bleibt erhalten. Gemäß einer Ausführungsform ist der Kindersitz so in der Sanitärzelle angeordnet und die Sanitärzelle so ausgebildet, dass der Bewegungsbereich für Rollstühle auch im ausgeklappten Zustand des Kindersitzes frei ist. Der Klappmechanismus bringt den Vorteil einer Platzersparnis des Kindersitzes im eingeklappten Zustand mit sich.

Weitergebildet ist der Kindersitz frei von einer Klemmgefahr für ein vom Kindersitz aufgenommenes Kleinkind beim Einklappen des Kindersitzes ausgebildet. Der Kindersitz ist so konstruiert, dass beim Einklappen für Babys keine Klemmgefahr besteht.

Weitergebildet ist der Kindersitz frei von Kleinteilen, insbesondere von Kleinkindern verschluckbaren Kleinteile, und/oder Gurten ist. Gurte können gegebenenfalls eine Strangulationsgefahr darstellen.

Der Kindersitz kann eine Breite von weniger als 40cm und/oder eine Höhe von weniger als 80cm aufweisen. Es kann so ausgeführt sein, dass er Belastungen von bis zu 15kg und kurzzeitig bis zu 30kg standhält. Eine Rücken- und Kopffläche der Rückenlehne kann mit einem Polster ausgeführt sein, wodurch ein erhöhter Sitzkomfort des aufgenommenen Kleinkinds erreicht wird. Darüber hinaus kann der Kindersitz zum Einsatz in Schienenfahrzeugen zertifizierbar sein. Die Materialien sind entsprechend der geltenden Vorschriften hinsichtlich Brandschutzsicherheit, Reinigungsmittelbeständigkeit und/oder Vandalismussicherheit ausgewählt. Beispielsweise umfassen ein Wickeltisch der Sanitärzelle und der Kindesitz dieselben Werkstoffe betreffend Rahmen/Gestell und/oder Polsterung. Auch seine Konstruktion ist entsprechend robust ausgewählt.

Die Erfindung lässt zahlreiche Ausführungsformen zu. Sie wird anhand der nachfolgenden Figuren näher erläutert, in denen jeweils ein Ausgestaltungsbeispiel dargestellt ist. Gleiche Elemente in den Figuren sind mit gleichen Bezugszeichen versehen.
- Fig. 1: zeigt schematisch eine Draufsicht auf ein Ausgestaltungsbeispiel einer erfindungsgemäßen Sanitärzelle,
- Fig. 2: zeigt schematisch eine Ausführungsform eines klappbaren Kindersitzes für Kleinkinder.

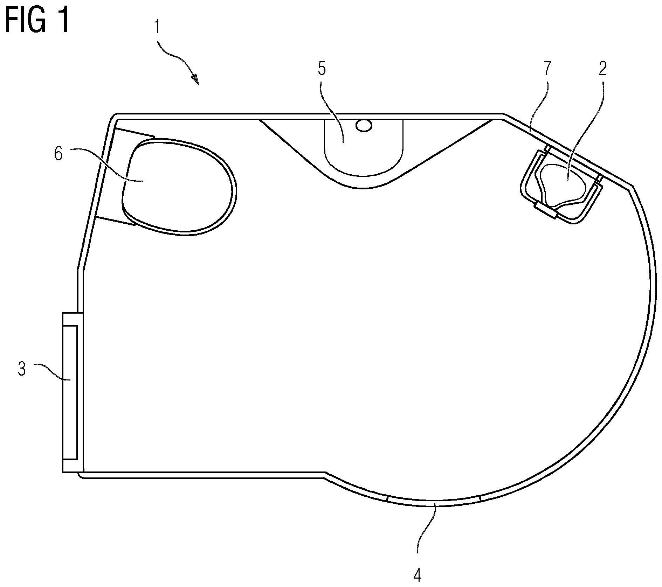

In Fig. 1 ist eine erfindungsgemäße Sanitärzelle 1 schematisch in einer Draufsicht dargestellt. Sie ist hier als rollstuhlgerechte Sanitärzelle 2 ausgebildet.

In der Sanitärzelle 1 ist an einer Wand 7 ein klappbarer Kindersitz 2 befestigt und im ausgeklappten Zustand veranschaulicht, der zur Aufnahme eines Kleinkinds geeignet ausgebildet ist.

Des weiteren umfasst die Sanitärzelle 1 in diesem Ausführungsbeispiele noch folgende Einrichtungen: einen klappbaren Wickeltisch 3, der hier in einem eingeklappten Zustand skizziert ist, eine Tür 4, ein Waschbecken 5 und eine Toilette 6 sowie den genannten Einrichtungen zugeordnete Bedienelemente, die nicht näher detailliert gezeichnet sind, wie beispielsweise ein Auslösetaster für die Toilettenspülung, ein Auslösetaster für einen oberhalb des Waschbeckens angeordneten Wasserhahn, einen Türöffner etc.

Der Kindersitz 2 ist nun so an der Wand 7 der Sanitärzelle 1 angeordnet und die Sanitärzelle 1 ausgebildet, dass ein Raum, welcher von einem im Kindersitz 2 aufgenommenen Kleinkind erreichbar ist, frei von sämtlichen Einrichtungen 3, 4, 5, 6 der Sanitärzelle ist. Ein Abstand zwischen Kindersitz 2 und sämtlichen Einrichtungen 3, 4, 5, 6 der Sanitärzelle ist entsprechend so groß bemessen, dass die Einrichtungen 3, 4, 5, 6 von einem im Kindersitz aufgenommenen Kleinkind nicht erreichbar sind. Darüber hinaus kann ein Abstand zu sämtlichen metallischen Konstruktionselementen, wie Schraub- oder Nietverbindungen, der Sanitärzelle 1 so bemessen sein, dass diese von einem im Kindersitz 2 aufgenommenen Kleinkind nicht erreichbar sind.

Auch der Bewegungsbereich in der Sanitärzelle 1, hier der freie Raum zwischen den genannten Elementen, ist ausreichend bemessen zur Nutzung der Sanitärzelle für mobilitätseingeschränkte Personen in Rollstühlen.

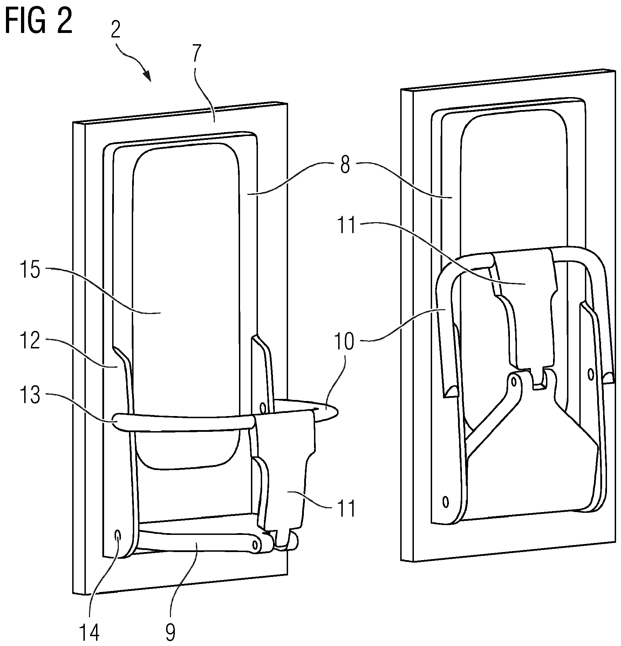

Der Kindersitz 2 aus Fig. 1 ist wird nun anhand Fig. 2 beschrieben.

Er umfasst eine, insbesondere starre, Rückenlehne 8, die an der Wand 7 der Sanitärzelle 1 befestigt ist. An der Rückenlehne 8 ist hier noch ein Polster 15 angeordnet für den verbesserten Komfort des aufgenommenen Kleinkinds im Rücken- und Kopfbereich. Darüber hinaus weist die Rückenlehne 8 Seitenwangen 12 für verbesserten Seitenhalt auf.

An den Seitenwangen 12 der Rückenlehne 8 ist eine Sitzfläche 9 um einen Drehpunkt 14 drehbar gelagert. Damit ist die Sitzfläche 9 von einem eingeklappten Zustand zur Platzersparnis in einen ausgeklappten Zustand zur Aufnahme eines Kleinkinds und zurück klappbar. Daher wird der Kindersitz 2 auch als klappbar bezeichnet.

Auch ein Brustbügel 10 ist um einen Drehpunkt 13 drehbar an den Seitenwangen 12 der Rückenlehne 8 gelagert. Der Brustbügel 10 ist hier c-förmig ausgebildet, so dass er ein aufgenommenes Kleinkind umschließt und somit gleichzeitig als Armlehne wirkt.

Sitzfläche 9 und Brustbügel 10 sind über einen festen Steg als Sicherung gegen Herausrutschen des Kleinkinds 11 miteinander verbunden, der jeweils drehbar an der Sitzfläche 9 und dem Brustbügel 10 gelagert ist, so dass bei einer Ein- und Ausklappbewegung der Sitzfläche 9 auch der Brustbügel 10 ein- bzw. ausklappt.

## Patentansprüche

1. Sanitärzelle (1) für ein Schienenfahrzeug umfassend wenigstens einen an einer Wand (7) der Sanitärzelle befestigten Kindersitz (2), **dadurch gekennzeichnet, dass** der Kindersitz (2) zur Aufnahme eines Kleinkinds geeignet ausgebildet ist und so an der Wand (7) der Sanitärzelle (1) befestigt ist, dass ein Raum, welcher von einem im Kindersitz (2) aufgenommenen Kleinkind erreichbar ist, frei von Einrichtungen (3, 4, 5, 6) der Sanitärzelle ist.

2. Sanitärzelle (1) nach Anspruch 1, **dadurch gekennzeichnet, dass** ein Raum, welcher von einem im Kindersitz (2) aufgenommenen Kleinkind erreichbar ist, frei von metallischen Konstruktionselementen der Sanitärzelle (1) ist.

3. Sanitärzelle nach einem der Ansprüche 1 oder 2, **dadurch gekennzeichnet, dass** sie als rollstuhlgerechte Sanitärzelle (1) ausgebildet ist, wobei ein vorgegebener Bewegungsbereich der Sanitärzelle (1) für Rollstühle frei vom Kindersitz (2) ist.

4. Sanitärzelle (1) nach einem der Ansprüche 1 bis 3, **dadurch gekennzeichnet, dass** der Kindersitz (2) klappbar ausgebildet ist, mit einer Rückenlehne (8), die an der Wand (7) der Sanitärzelle (1) befestigt ist, und mit einer an der Rückenlehne (8) klappbar gelagerten Sitzfläche (9) und mit einem an der Rückenlehne (8) drehbar gelagerten Brustbügel (10), der mit der Sitzfläche (9) über eine vertikale Sicherung (11) gegen Herausrutschen des Kleinkinds verbunden ist.

5. Sanitärzelle (1) nach Anspruch 4, **dadurch gekennzeichnet, dass** der Kindersitz (2) frei von einer Klemmgefahr für ein vom Kindersitz (2) aufgenommenes Kleinkind beim Einklappen des Kindersitzes (2) ausgebildet ist.

6. Sanitärzelle (1) nach einem der Ansprüche 1 bis 5, **dadurch gekennzeichnet, dass** der Kindersitz (2) frei von Kleinteilen und/oder Gurten ist.
